(19) **Europäisches Patentamt**
**European Patent Office**
**Office européen des brevets**

(11) **EP 3 602 989 B1**

(12) **EUROPEAN PATENT SPECIFICATION**

(45) Date of publication and mention
of the grant of the patent:
**13.12.2023 Bulletin 2023/50**

(21) Application number: **18774908.0**

(22) Date of filing: **27.03.2018**

(51) International Patent Classification (IPC):
**H04L 27/26** (2006.01)  **H04L 1/00** (2006.01)
**H04L 27/34** (2006.01)  **H04L 1/08** (2006.01)

(52) Cooperative Patent Classification (CPC):
**H04L 25/03866; H04B 7/04; H04L 1/0041;**
**H04L 1/0057; H04L 1/08; H04L 27/26;**
H04L 1/0643; H04L 5/0007; H04L 27/2601;
H04L 27/34

(86) International application number:
**PCT/US2018/024427**

(87) International publication number:
**WO 2018/183231 (04.10.2018 Gazette 2018/40)**

(54) **APPARATUS, SYSTEM AND METHOD OF COMMUNICATING AN EDMG MU PPDU WITH A HEADER B FIELD INCLUDING REPEATING AND SCRAMBLING OF ENCODED HEADER BITS**

VORRICHTUNG, SYSTEM UND VERFAHREN ZUR KOMMUNIKATION EINER EDMG-MU-PPDU MIT EINEM HEADER-B-FELD MIT WIEDERHOLUNG UND VERWÜRFELUNG CODIERTER HEADER-BITS

APPAREIL, SYSTÈME ET PROCÉDÉ DE COMMUNICATION D'UNE PPDU MU EDMG AYANT UN CHAMP B D'EN-TÊTE COMPRENANT LA RÉPÉTITION ET LE SCRAMBLAGE DE BITS D'EN-TÊTE CODÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2017 US 201762476929 P**
**10.10.2017 US 201762570356 P**

(43) Date of publication of application:
**05.02.2020 Bulletin 2020/06**

(73) Proprietor: **Intel Corporation**
**Santa Clara, CA 95054 (US)**

(72) Inventors:
• **LOMAYEV, Artyom**
**Nizhny Novgorod 603024 (RU)**
• **MALTSEV, Alexander**
**603163 (RU)**
• **DA SILVA, Claudio**
**Portland, Oregon 97229 (US)**
• **CORDEIRO, Carlos**
**Camas, WA 98607 (US)**

• **GENOSSAR, Michael**
**7173221 Modiin (IL)**

(74) Representative: **HGF**
**HGF Limited**
**Fountain Precinct**
**Balm Green**
**Sheffield S1 2JA (GB)**

(56) References cited:
**WO-A1-2017/014551      WO-A1-2017/014551**
**US-A1- 2017 033 949      US-A1- 2017 048 095**

EP 3 602 989 B1

- **ARTYOM LOMAYEV (INTEL): "EDMG Header-B Encoding and Modulation Method for SC PHY in 11ay ; 11-16-0989-00-00ay-edmg-header-b-encoding-and-modulation-method-for-sc-phy-in-11ay", IEEE DRAFT; 11-16-0989-00-00AY-EDMG-HEADER-B-ENCODING- AND-MODULATION-METHOD-FOR-SC-PHY-IN-11AY, IEEE-SA MENTOR, PISCATAWAY, NJ USA , vol. 802.11ay 25 July 2016 (2016-07-25), pages 1-13, XP068107351, Retrieved from the Internet: URL:https://mentor.ieee.org/802.11/dcn/16/ 11-16-0989-00-00ay-edmg-header-b-encoding-and-modulation-method-for-sc-phy-in-11ay.pptx [retrieved on 2016-07-25]**
- **TAKENORI SAKAMOTO: "EDMG A-PPDU for 11ay SC mode", IEEE 802.11-17/0051R3, 17 January 2017 (2017-01-17), XP055531130, United States ISBN: 978-0-8493-7217-9**
- **THE 802 11 WORKING GROUP OF THE LAN/MAN STANDARDS COMMITTEE OF THE IEEE COMPUTER SOCIETY: IEEE DRAFT; DRAFT P802.11AY_D0.5, IEEE-SA, PISCATAWAY, NJ USA , vol. 802.11ay drafts, no. D0.5 13 August 2017 (2017-08-13), pages 1-348, XP068137603, Retrieved from the Internet: URL:www.ieee802.org/11/private/Draft_Stand ards/11ay/Draft P802.11ay_D0.5.pdf [retrieved on 2017-08-13]**
- **ARTYOM LOMAYEV (INTEL): "30 6 4 Encoding of EDMG-Header-B for OFDM Mode", IEEE DRAFT; 11-17-0755-00-00AY-30-6-4-ENCODING-OF-EDMG -HEADER-B-FOR-OFDM-MODE, IEEE-SA MENTOR, PISCATAWAY, NJ USA , vol. 802.11ay 7 May 2017 (2017-05-07), pages 1-7, XP068116003, Retrieved from the Internet: URL:https://mentor.ieee.org/802.11/dcn/17/ 11-17-0755-00-00ay-30-6-4-encoding-of-edmg -header-b-for-ofdm-mode.docx [retrieved on 2017-05-07]**
- **ARTYOM LOMAYEV et al.: "EDMG Header-B Encoding and Modulation for SC PHY in Hay", IEEE 802.11-16/0989r0, 25 July 2016 (2016-07-25), XP068107351,**
- **ARTYOM LOMAYEV et al.: "Non-EDMG Part of Preamble for MIMO in Ilay", IEEE 802.11-16/0988rl, 25 July 2016 (2016-07-25), XP055531579,**

Description

## CROSS REFERENCE

This application claims the benefit of and priority from US Provisional Patent Application No. 62/570,356 entitled "Enhanced Directional Multi-Gigabit (EDMG) Header-B Encoding", filed October 10, 2017, and US Provisional Patent Application No. 62/476,929 entitled "Apparatus, System and Method of Communicating an EDMG MU PPDU with a Header B Field", filed March 27, 2017.

## TECHNICAL FIELD

Embodiments described herein generally relate to communicating an Enhanced Directional Multi-Gigabit (DMG) (EDMG) Multi-User (MU) Physical Layer Protocol Data Unit (PPDU) with a Header B field.

## BACKGROUND

A wireless communication network in a millimeter-wave band may provide high-speed data access for users of wireless communication devices.
ARTYOM LOMAYEV (INTEL), "EDMG Header-B Encoding and Modulation Method for SC PHY in 11ay ; 11-16-0989-00-00ay-edmg-header-b-encoding-and-modulation-method-for-sc-phy-in-11ay", vol. 802.11ay, (20160725), pages 1 - 13, IEEE DRAFT; 11-16-0989-00-00AY-EDMG-HEADER-B-ENCODING-AND-MODULATION-METHOD-FOR-SC-PHY-IN-11AY, IEEE-SA MENTOR, PISCATAWAY, NJ USA, URL: https://mentor.ieee.org/802.11/dcn/16/11-16-0989-00-00ay-edmg-header-b-encoding-and-modulation-method-for-sc-phy-in-11ay.pptx outlines an method of EDMG Header-B encoding according to an early draft version of the IEEE 802.11ay standard.

## BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

Fig. 1 is a schematic block diagram illustration of a system, in accordance with some demonstrative embodiments.

Fig. 2 is a schematic illustration of an Enhanced Directional Multi-Gigabit (EDMG) Physical Layer Protocol Data Unit (PPDU) format, which may be implemented in accordance with some demonstrative embodiments.

Fig. 3 is a schematic flow-chart illustration of a method of communicating an EDMG Multi-User (MU) PPDU with a Header B field, in accordance with some demonstrative embodiments.

Fig. 4 is a schematic flow-chart illustration of a method of communicating an EDMG MU PPDU with a Header B field, in accordance with some demonstrative embodiments.

Fig. 5 is a schematic illustration of a product of manufacture, in accordance with some demonstrative embodiments.

## DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.
Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment", "an embodiment", "demonstrative embodiment", "various embodiments" etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing IEEE 802.11 standards (including IEEE 802.11-2016 (*IEEE 802.11-2016, IEEE Standard for Information technology-Telecommunications and information exchange between systems Local and metropolitan area networks- -Specific requirements Part 11: Wireless LAN Medium Access Control (MAC) and Physical Layer (PHY) Specifications, December 7, 2016);* and/or IEEE 802.11ay (*P802.11ay Standard for Information Technology-Telecommunications and Information Exchange Between Systems Local and Metropolitan Area Networks-Specific Requirements Part 11: Wireless LAN Medium Access Control (MAC) and Physical Layer (PHY) Specifications--Amendment: Enhanced Throughput for Operation in License-Exempt Bands Above 45 GHz)*) and/or future versions and/or derivatives thereof, devices and/or networks operating in accordance with existing WFA Peer-to-Peer (P2P) specifications (*WiFi P2P technical specification, version 1.7, July 6, 2016*) and/or future versions and/or derivatives thereof, devices and/or networks operating in accordance with existing Wireless-Gigabit-Alliance (WGA) specifications (including *Wireless Gigabit Alliance, Inc WiGig MAC and PHY Specification Version 1.1, April 2011, Final specification*) and/or future versions and/or derivatives thereof, devices and/or networks operating in accordance with existing cellular specifications and/or protocols, e.g., 3rd Generation Partnership Project (3GPP), 3GPP Long Term Evolution (LTE) and/or future versions and/or derivatives thereof, units and/or devices which are part of the above networks, and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems, for example, Radio Frequency (RF), Infra Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBee™, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE advanced, Enhanced Data rates for GSM Evolution (EDGE), or the like. Other embodiments may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, or group), and/or memory (shared, dedicated, ,dedicated or group), that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative embodiments may be used in conjunction with a WLAN, e.g., a WiFi network. Other embodiments may be used in conjunction with any other suitable wireless communication network, for example, a wireless area network, a "piconet", a WPAN, a WVAN and the like.

Some demonstrative embodiments may be used in conjunction with a wireless communication network communicating over a frequency band above 45 Gigahertz (GHz), e.g., 60GHz. However, other embodiments may be implemented utilizing any other suitable wireless communication frequency bands, for example, an Extremely High Frequency (EHF) band (the millimeter wave (mmWave) frequency band), e.g., a frequency band within the frequency band of between 20Ghz and 300GHz, a frequency band above 45GHz, a 5G frequency band, a frequency band below 20GHz, e.g., a Sub 1 GHz (S1G) band, a 2.4GHz band, a 5GHz band, a WLAN frequency band, a WPAN frequency band, a frequency band according to the WGA specification, and the like.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a set of switched beam antennas, and/or the like.

The phrases "directional multi-gigabit (DMG)" and "directional band" (DBand), as used herein, may relate to a frequency band wherein the Channel starting frequency is above 45 GHz. In one example, DMG communications may involve one or more directional links to communicate at a rate of multiple gigabits per second, for example, at least 1 Gigabit per second, e.g., at least 7 Gigabit per second, at least 30 Gigabit per second, or any other rate.

Some demonstrative embodiments may be implemented by a DMG STA (also referred to as a "mmWave STA (mSTA)"), which may include for example, a STA having a radio transmitter, which is capable of operating on a channel that is within the DMG band. The DMG STA may perform other additional or alternative functionality. Other embodiments may be implemented by any other apparatus, device and/or station.

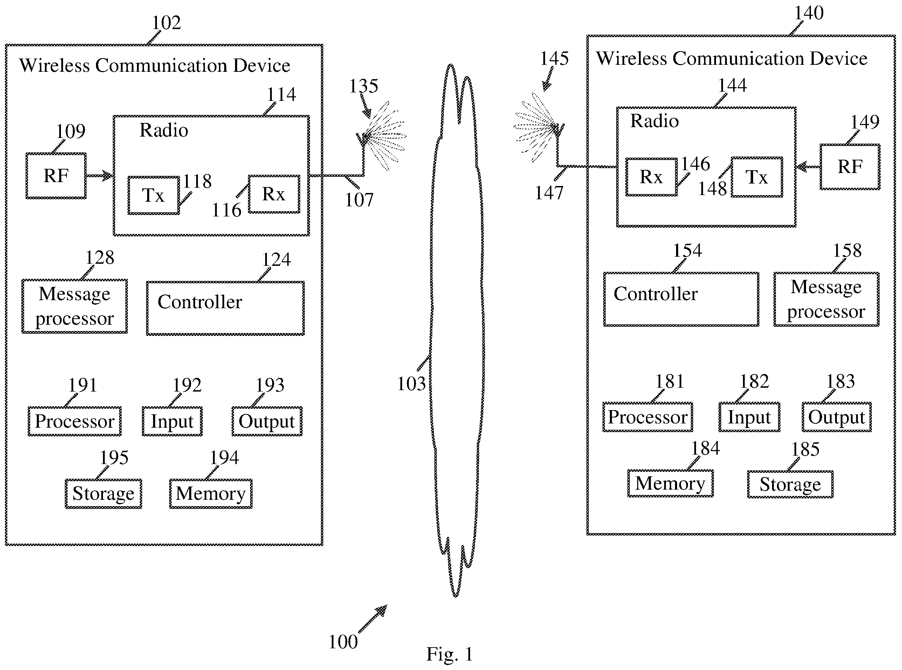

Reference is made to Fig. 1, which schematically illustrates a system 100, in accordance with some demonstrative embodiments.

As shown in Fig. 1, in some demonstrative embodiments, system 100 may include one or more wireless communication devices. For example, system 100 may include a wireless communication device 102, a wireless communication device 140, and/or one more other devices.

In some demonstrative embodiments, devices 102 and/or 140 may include a mobile device or a non-mobile, e.g., a static, device.

For example, devices 102 and/or 140 may include, for example, a UE, an MD, a STA, an AP, a PC, a desktop computer, a mobile computer, a laptop computer, an Ultrabook™ computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative embodiments, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative embodiments, some or all of the components of one or more of devices 102 and/or 140 may be enclosed in a common housing or packaging, and may be interconnected or operably associated using one or more wired or wireless links. In other embodiments, components of one or more of devices 102 and/or 140 may be distributed among multiple or separate devices.

In some demonstrative embodiments, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative embodiments, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative embodiments, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a floppy disk drive, a Compact Disk (CD) drive, a CD-ROM drive, a DVD drive, or other suitable removable or non-removable storage units. Memory unit 194 and/or storage unit 195, for example, may store data processed by device 102. Memory unit 184 and/or storage unit 185, for example, may store data processed by device 140.

In some demonstrative embodiments, wireless communication devices 102 and/or 140 may be capable of communicating content, data, information and/or signals via a wireless medium (WM) 103. In some demonstrative embodiments, wireless medium 103 may include, for example, a radio channel, a cellular channel, an RF channel, a WiFi channel, a 5G channel, an IR channel, a Bluetooth (BT) channel, a Global Navigation Satellite System (GNSS) Channel, and the like.

In some demonstrative embodiments, WM 103 may include one or more directional bands and/or channels. For example, WM 103 may include one or more millimeter-wave (mmWave) wireless communication bands and/or channels.

In some demonstrative embodiments, WM 103 may include one or more DMG channels. In other embodiments WM 103 may include any other directional channels.

In other embodiments, WM 103 may include any other type of channel over any other frequency band.

In some demonstrative embodiments, device 102 and/or device 140 may include one or more radios including circuitry and/or logic to perform wireless communication between devices 102, 140 and/or one or more other wireless communication devices. For example, device 102 may include at least one radio 114, and/or device 140 may include at least one radio 144.

In some demonstrative embodiments, radio 114 and/or radio 144 may include one or more wireless receivers (Rx) including circuitry and/or logic to receive wireless communication signals, RF signals, frames, blocks, transmission streams, packets, messages, data items, and/or data. For example, radio 114 may include at least one receiver 116, and/or radio 144 may include at least one receiver 146.

In some demonstrative embodiments, radio 114 and/or radio 144 may include one or more wireless transmitters (Tx) including circuitry and/or logic to transmit wireless communication signals, RF signals, frames, blocks, transmission streams, packets, messages, data items, and/or data. For example, radio 114 may include at least one transmitter 118, and/or radio 144 may include at least one transmitter 148.

In some demonstrative embodiments, radio 114 and/or radio 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radio 114 and/or radio 144 may include or may be implemented as part of a wireless Network Interface Card (NIC), and the like.

In some demonstrative embodiments, radios 114 and/or 144 may be configured to communicate over a directional band, for example, an mmWave band, a 5G band, and/or any other band, for example, a 2.4GHz band, a 5GHz band, a S1G band, and/or any other band.

In some demonstrative embodiments, radios 114 and/or 144 may include, or may be associated with one or more, e.g., a plurality of, directional antennas.

In some demonstrative embodiments, device 102 may include one or more, e.g., a plurality of, directional antennas 107, and/or device 140 may include on or more, e.g., a plurality of, directional antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. Antennas 107 and/or 147 may include, for example, antennas suitable for directional communication, e.g., using beamforming techniques. For example, antennas 107 and/or 147 may include a phased array antenna, a multiple element antenna, a set of switched beam antennas, and/or the like. In some embodiments, antennas 107 and/or 147 may implement transmit and receive functionalities using separate transmit and receive antenna elements. In some embodiments, antennas 107 and/or 147 may implement transmit and receive functionalities using common and/or integrated transmit/receive elements.

In some demonstrative embodiments, antennas 107 and/or 147 may include directional antennas, which may be steered to one or more beam directions. For example, antennas 107 may be steered to one or more beam directions 135, and/or antennas 147 may be steered to one or more beam directions 145.

In some demonstrative embodiments, antennas 107 and/or 147 may include and/or may be implemented as part of a single Phased Antenna Array (PAA).

In some demonstrative embodiments, antennas 107 and/or 147 may be implemented as part of a plurality of PAAs, for example, as a plurality of physically independent PAAs.

In some demonstrative embodiments, a PAA may include, for example, a rectangular geometry, e.g., including an integer number, denoted M, of rows, and an integer number, denoted N, of columns. In other embodiments, any other types of antennas and/or antenna arrays may be used.

In some demonstrative embodiments, antennas 107 and/or antennas 147 may be connected to, and/or associated with, one or more Radio Frequency (RF) chains.

In some demonstrative embodiments, device 102 may include one or more, e.g., a plurality of, RF chains 109 connected to, and/or associated with, antennas 107.

In some demonstrative embodiments, one or more of RF chains 109 may be included as part of, and/or implemented as part of one or more elements of radio 114, e.g., as part of transmitter 118 and/or receiver 116.

In some demonstrative embodiments, device 140 may include one or more, e.g., a plurality of, RF chains 149 connected to, and/or associated with, antennas 147.

In some demonstrative embodiments, one or more of RF chains 149 may be included as part of, and/or implemented as part of one or more elements of radio 144, e.g., as part of transmitter 148 and/or receiver 146.

In some demonstrative embodiments, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative embodiments, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative embodiments, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other embodiments, message processor 128 may be configured to perform any other additional or alternative functionality and/or may include any other additional or alternative components to generate and/or process a message to be transmitted.

In some demonstrative embodiments, device 140 may include a message processor 158 configured to generate, process and/or access one or messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other embodiments, message processor 158 may be configured to perform any other additional or alternative functionality and/or may include any other additional or alternative components to generate and/or process a message to be transmitted.

In some demonstrative embodiments, message processors 128 and/or 158 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative embodiments, at least part of the functionality of message processor 128 may be implemented as part of radio 114, and/or at least part of the functionality of message processor 158 may be implemented as part of radio 144.

In some demonstrative embodiments, at least part of the functionality of message processor 128 may be implemented as part of controller 124, and/or at least part of the functionality of message processor 158 may be implemented as part of controller 154.

In other embodiments, the functionality of message processor 128 may be implemented as part of any other element of device 102, and/or the functionality of message processor 158 may be implemented as part of any other element of device 140.

In some demonstrative embodiments, at least part of the functionality of controller 124 and/or message processor 128 may be implemented by an integrated circuit, for example, a chip, e.g., a System on Chip (SoC). In one example, the chip or SoC may be configured to perform one or more functionalities of radio 114. For example, the chip or SoC may include one or more elements of controller 124, one or more elements of message processor 128, and/or one or more elements of radio 114. In one example, controller 124, message processor 128, and radio 114 may be implemented as part of the chip or SoC.

In other embodiments, controller 124, message processor 128 and/or radio 114 may be implemented by one or more additional or alternative elements of device 102.

In some demonstrative embodiments, at least part of the functionality of controller 154 and/or message processor 158 may be implemented by an integrated circuit, for example, a chip, e.g., a System on Chip (SoC). In one example, the chip or SoC may be configured to perform one or more functionalities of radio 144. For example, the chip or SoC may include one or more elements of controller 154, one or more elements of message processor 158, and/or one or more elements of radio 144. In one example, controller 154, message processor 158, and radio 144 may be implemented as part of the chip or SoC.

In other embodiments, controller 154, message processor 158 and/or radio 144 may be implemented by one or more additional or alternative elements of device 140.

In some demonstrative embodiments, device 102 and/or device 140 may include, operate as, perform the role of, and/or perform one or more functionalities of, one or more STAs. For example, device 102 may include at least one STA, and/or device 140 may include at least one STA.

In some demonstrative embodiments, device 102 and/or device 140 may include, operate as, perform the role of, and/or perform one or more functionalities of, one or more DMG STAs. For example, device 102 may include, operate as, perform the role of, and/or perform one or more functionalities of, at least one DMG STA, and/or device 140 may include, operate as, perform the role of, and/or perform one or more functionalities of, at least one DMG STA.

In other embodiments, devices 102 and/or 140 may include, operate as, perform the role of, and/or perform one or more functionalities of, any other wireless device and/or station, e.g., a WLAN STA, a WiFi STA, and the like.

In some demonstrative embodiments, device 102 and/or device 140 may be configured operate as, perform the role of, and/or perform one or more functionalities of, an access point (AP), e.g., a DMG AP, and/or a personal basic service set (PBSS) control point (PCP), e.g., a DMG PCP, for example, an AP/PCP STA, e.g., a DMG AP/PCP STA.

In some demonstrative embodiments, device 102 and/or device 140 may be configured to operate as, perform the role of, and/or perform one or more functionalities of, a non-AP STA, e.g., a DMG non-AP STA, and/or a non-PCP STA, e.g., a DMG non-PCP STA, for example, a non-AP/PCP STA, e.g., a DMG non-AP/PCP STA.

In other embodiments, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains a station (STA), e.g., one STA, and provides access to distribution services, via the wireless medium (WM) for associated STAs. The AP may perform any other additional or alternative functionality.

In one example, a personal basic service set (PBSS) control point (PCP) may include an entity that contains a STA, e.g., one station (STA), and coordinates access to the wireless medium (WM) by STAs that are members of a PBSS. The PCP may perform any other additional or alternative functionality.

In one example, a PBSS may include a directional multi-gigabit (DMG) basic service set (BSS) that includes, for example, one PBSS control point (PCP). For example, access to a distribution system (DS) may not be present, but, for example, an intra-PBSS forwarding service may optionally be present.

In one example, a PCP/AP STA may include a station (STA) that is at least one of a PCP or an AP. The PCP/AP STA may perform any other additional or alternative functionality.

In one example, a non-AP STA may include a STA that is not contained within an AP. The non-AP STA may perform any other additional or alternative functionality.

In one example, a non-PCP STA may include a STA that is not a PCP. The non-PCP STA may perform any other additional or alternative functionality.

In one example, a non PCP/AP STA may include a STA that is not a PCP and that is not an AP. The non-PCP/AP STA may perform any other additional or alternative functionality.

In some demonstrative embodiments devices 102 and/or 140 may be configured to communicate over a Next Generation 60 GHz (NG60) network, an Enhanced DMG (EDMG) network, and/or any other network. For example, devices 102 and/or 140 may perform Multiple-Input-Multiple-Output (MIMO) communication, for example, for communicating over the NG60 and/or EDMG networks, e.g., over an NG60 or an EDMG frequency band.

In some demonstrative embodiments, devices 102 and/or 140 may be configured to operate in accordance with one or more Specifications, for example, including one or more *IEEE 802.11 Specifications,* e.g., an *IEEE 802.11-2016 Specification,* an *IEEE 802.11ay Specification,* and/or any other specification and/or protocol.

Some demonstrative embodiments may be implemented, for example, as part of a new standard in an mmWave band, e.g., a 60GHz frequency band or any other directional band, for example, as an evolution of an *IEEE 802.11-2016 Specification and/or* an *IEEE 802.11ad Specification.*

In some demonstrative embodiments, devices 102 and/or 140 may be configured according to one or more standards, for example, in accordance with an *IEEE 802.11ay Standard,* which may be, for example, configured to enhance the efficiency and/or performance of an *IEEE 802.11ad Specification,* which may be configured to provide Wi-Fi connectivity in a 60 GHz band.

Some demonstrative embodiments may enable, for example, to significantly increase the data transmission rates defined in the *IEEE 802.11ad Specification,* for example, from 7 Gigabit per second (Gbps), e.g., up to 30 Gbps, or to any other data rate, which may, for example, satisfy growing demand in network capacity for new coming applications.

Some demonstrative embodiments may be implemented, for example, to allow increasing a transmission data rate, for example, by applying MIMO and/or channel bonding techniques.

In some demonstrative embodiments, devices 102 and/or 140 may be configured to communicate MIMO communications over the mmWave wireless communication band.

In some demonstrative embodiments, device 102 and/or device 140 may be configured to support one or more mechanisms and/or features, for example, channel bonding, Single User (SU) MIMO, and/or Multi-User (MU) MIMO, for example, in accordance with an *IEEE 802.11ay Standard* and/or any other standard and/or protocol.

In some demonstrative embodiments, device 102 and/or device 140 may include, operate as, perform a role of, and/or perform the functionality of, one or more EDMG STAs. For example, device 102 may include, operate as, perform a role of, and/or perform the functionality of, at least one EDMG STA, and/or device 140 may include, operate as, perform a role of, and/or perform the functionality of, at least one EDMG STA.

In some demonstrative embodiments, devices 102 and/or 140 may implement a communication scheme, which may include Physical layer (PHY) and/or Media Access Control (MAC) layer schemes, for example, to support one or more applications, and/or increased transmission data rates, e.g., data rates of up to 30 Gbps, or any other data rate.

In some demonstrative embodiments, the PHY and/or MAC layer schemes may be configured to support frequency channel bonding over a mmWave band, e.g., over a 60 GHz band, SU MIMO techniques, and/or MU MIMO techniques.

In some demonstrative embodiments, devices 102 and/or 140 may be configured to implement one or more mechanisms, which may be configured to enable SU and/or MU communication of Downlink (DL) and/or Uplink frames (UL) using a MIMO scheme.

In some demonstrative embodiments, device 102 and/or device 140 may be configured to implement one or more MU communication mechanisms. For example, devices 102 and/or 140 may be configured to implement one or more MU mechanisms, which may be configured to enable MU communication of DL frames using a MIMO scheme, for example, between a device, e.g., device 102, and a plurality of devices, e.g., including device 140 and/or one or more other devices.

In some demonstrative embodiments, devices 102 and/or 140 may be configured to communicate over an NG60 network, an EDMG network, and/or any other network and/or any other frequency band. For example, devices 102 and/or 140 may be configured to communicate DL MIMO transmissions and/or UL MIMO transmissions, for example, for communicating over the NG60 and/or EDMG networks.

Some wireless communication Specifications, for example, the *IEEE 802.11ad-2012 Specification,* may be configured to support a SU system, in which a STA may transmit frames to a single STA at a time. Such Specifications may not be able, for example, to support a STA transmitting to multiple STAs simultaneously, for example, using a MU-MIMO scheme, e.g., a DL MU-MIMO, or any other MU scheme.

In some demonstrative embodiments, devices 102 and/or 140 may be configured to communicate over a channel bandwidth, e.g., of at least 2.16GHz, in a frequency band above 45GHz.

In some demonstrative embodiments, devices 102 and/or 140 may be configured to implement one or more mechanisms, which may, for example, enable to extend a single-channel BW scheme, e.g., a scheme in accordance with the *IEEE 802.11ad Specification* or any other scheme, for higher data rates and/or increased capabilities, e.g., as described below.

In one example, the single-channel BW scheme may include communication over a 2.16 GHz channel (also referred to as a "single-channel" or a "DMG channel").

In some demonstrative embodiments, devices 102 and/or 140 may be configured to implement one or more channel bonding mechanisms, which may, for example, support communication over a channel BW (also referred to as a "wide channel", an "EDMG channel", or a "bonded channel") including two or more channels, e.g., two or more 2.16 GHz channels, e.g., as described below.

In some demonstrative embodiments, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative embodiments are described herein with respect to communication over a channel BW including two or more 2.16 GHz channels, however other embodiments may be implemented with respect to communications over a channel bandwidth, e.g., a "wide" channel, including or formed by any other number of two or more channels, for example, an aggregated channel including an aggregation of two or more channels.

In some demonstrative embodiments, device 102 and/or device 140 may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW, e.g., as described below.

In some demonstrative embodiments, device 102 and/or device 140 may be configured to implement one or more channel bonding mechanisms, which may, for example, support an increased channel bandwidth, for example, a channel BW of 4.32 GHz, e.g., including two 2.16Ghz channels according to a channel bonding factor of two, a channel BW of 6.48 GHz, e.g., including three 2.16Ghz channels according to a channel bonding factor of three, a channel BW of 8.64 GHz, e.g., including four 2.16Ghz channels according to a channel bonding factor of four, and/or any other additional or alternative channel BW, e.g., including any other number of 2.16Ghz channels and/or according to any other channel bonding factor.

In some demonstrative embodiments, device 102 and/or device 140 may be configured to communicate one or more transmissions over one or more channel BWs, for example, including a channel BW of 2.16GHz, a channel BW of 4.32GHz, a channel BW of 6.48GHz, a channel BW of 8.64GHz and/or any other channel BW.

In some demonstrative embodiments, introduction of MIMO may be based, for example, on implementing robust transmission modes and/or enhancing the reliability of data transmission, e.g., rather than the transmission rate, compared to a Single Input Single Output (SISO) case. For example, one or more Space Time Block Coding (STBC) schemes utilizing a space-time channel diversity property may be implemented to achieve one or more enhancements for the MIMO transmission.

In some demonstrative embodiments, devices 102 and/or 140 may be configured to generate, process, transmit and/or receive a Physical Layer (PHY) Protocol Data Unit (PPDU) having a PPDU format (also referred to as "EDMG PPDU format"), which may be configured, for example, for communication between EDMG stations, e.g., as described below.

In some demonstrative embodiments, a PPDU, e.g., an EDMG PPDU, may include at least one non-EDMG fields, e.g., a legacy field, which may be identified, decodable, and/or processed by one or more devices ("non-EDMG devices", or "legacy devices"), which may not support one or more features and/or mechanisms ("non-legacy" mechanisms or "EDMG mechanisms"). For example, the legacy devices may include non-EDMG stations, which may be, for example, configured according to an *IEEE 802.11-2016 Standard,* and the like. For example, a non-EDMG station may include a DMG station, which is not an EDMG station.

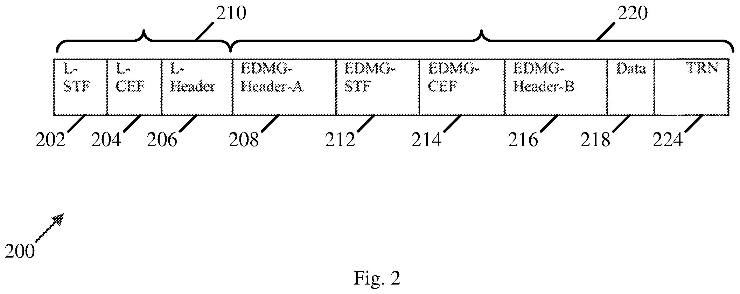

Reference is made to Fig. 2, which schematically illustrates an EDMG PPDU format 200, which may be implemented in accordance with some demonstrative embodiments. In one example, devices 102 (Fig. 1) and/or 140 (Fig. 1) may be configured to generate, transmit, receive and/or process one or more EDMG PPDUs having the structure and/or format of EDMG PPDU 200.

In one example, devices 102 (Fig. 1) and/or 140 (Fig. 1) may communicate EDMG PPDU 200, for example, as part of a transmission over a channel, e.g., an EDMG channel, having a channel bandwidth including a plurality of 2.16GHz channels, e.g., as described below.

In some demonstrative embodiments, as shown in Fig. 2, EDMG PPDU 200 may include a non-EDMG portion 210 ("legacy portion"), e.g., as described below.

In some demonstrative embodiments, as shown in Fig. 2, non-EDMG portion 210 may include a non-EDMG (legacy) Short Training Field (STF) (L-STF) 202, a non-EDMG (Legacy) Channel Estimation Field (CEF) (L-CEF) 204, and/or a non-EDMG header (L-header) 206.

In some demonstrative embodiments, as shown in Fig. 2, EDMG PPDU 200, may include an EDMG portion 220, for example, following non-EDMG portion 210, e.g., as described below.

In some demonstrative embodiments, as shown in Fig. 2, EDMG portion 220 may include a first EDMG header, e.g., an EDMG-Header-A 208, an EDMG-STF 212, an EDMG-CEF 214, a second EDMG header, e.g., an EDMG-Header-B 216, a Data field 218, and/or one or more beamforming training fields, e.g., a TRN field 224.

In some demonstrative embodiments, EDMG portion 220 may include some or all of the fields shown in Fig. 2 and/or one or more other additional or alternative fields.

In some demonstrative embodiments, Header B field 216 may be included, for example, in EDMG MU PPDUs, for example, on a per STA basis.

In some demonstrative embodiments, Header B field 216 corresponding to a STA addressed by the EDMG MU PPDU may include, for example, information relating to a transmission of a data unit, for example, a PHY Service Data Unit (PSDU) to the STA.

In some demonstrative embodiments, EDMG Header B field 216 may include for example, 64 bits, e.g., as described below. In other embodiments, the EDMG Header B field 216 may include any other number of bits.

In one example, EDMG Header B field 216 corresponding to the STA may include, for example, at least a scrambler seed field, a PSDU length field, e.g., to indicate a length of the PSDU to the STA, and/or one or more Modulation and Coding Scheme (MCS) fields to indicate one or more MCSs. For example, the Header B field may include first and second MCS fields to indicate MCSs for first and second respective spatial streams.

In other embodiments, EDMG Header B field 216 may include any other additional or alternative fields and/or information.

Referring back to Fig. 1, in some demonstrative embodiments, devices 102 and/or 140 may be configured to generate, transmit, receive and/or process one or more transmissions including a header field, for example, a Header B field, e.g., EDMG-Header-B field 216 (Fig. 2), which may be configured, for example, for EDMG SC and/or OFDM PHY, e.g., as described below.

In some demonstrative embodiments, devices 102 and/or 140 may be configured to generate, transmit, receive and/or process an EDMG MU PPDU including an EDMG-Header-B, e.g., EDMG-Header-B 216 (Fig. 2), for example, according to an encoding and modulation method, which may be configured, for example for SC and/or OFDM PHY, for example, to be implemented in a future *IEEE 802.11ay Specification,* e.g., as described below.

In some demonstrative embodiments, devices 102 and/or 140 may be configured to generate, transmit, receive and/or process an EDMG MU PPDU including an EDMG-Header-B, e.g., EDMG-Header-B 216 (Fig. 2), which may be configured, for example, to support and/or allow to transmit $N_{STS}$ = 2 space-time streams and/or any other number of space-time streams, e.g., per STA, for example, for a channel bonding transmission with a channel bonding factor of, for example, $N_{CB}$ = 1, 2, 3, or 4 and/or any other factor, e.g., as described below.

For example, the factor $N_{CB}$ may be implemented to define a number of channels, e.g., a number of contiguous 2.16GHz channels, which may be used for transmission of the PPDU. For example, a PPDU bandwidth of the PPDU may be defined as $N_{CB}$*2.16 GHz.

In some demonstrative embodiments, the EDMG Header B field, e.g., EDMG-Header-B 216 (Fig. 2), may be configured, for example, to be used to transmit control information, for example, from an AP, e.g., device 102, to a STA, e.g., device 140, for example, in a DL MU MIMO mode.

In other embodiments, the EDMG Header B field may be configured for any other type of transmission over any other channel bandwidth, channel bonding factor, and/or number of streams.

In some demonstrative embodiments, devices 102 and/or 140 may be configured to generate, transmit, receive and/or process an EDMG MU PPDU including an EDMG-Header-B field, e.g., EDMG-Header-B field 216 (Fig. 2), which may be encoded and/or modulated according to an EDMG Header B encoding and/or modulation scheme, e.g., as described below.

In some demonstrative embodiments, devices 102 and/or 140 may be configured to generate, transmit, receive and/or process an EDMG PPDU including an EDMG-Header-B field, e.g., EDMG-Header-B field 216 (Fig. 2), for example, according to an encoding and modulation method, which may improve Peak-to-Average Power ratio (PAPR) properties of a resulting waveform in time domain, e.g., as described below. For example, according to these embodiments, an encoding and modulation procedure for the EDMG Header B field may reduce the PAPR and/or may allow simple implementation.

In some demonstrative embodiments, devices 102 and/or 140 may be configured to generate, determine and/or define the EDMG-Header-B field, for example, for transmission over a 2.16 GHz channel, a 4.32 GHz channel, a 6.48 GHz channel, and/or a 8.64 GHz channel, and with single or multiple space-time streams, e.g., as described below.

In some demonstrative embodiments, devices 102 and/or 140 may be configured to generate, determine and/or define the EDMG-Header-B field, for example, to define an encoding procedure for a Single Carrier (SC) PHY, e.g., as described below.

In some demonstrative embodiments, devices 102 and/or 140 may be configured to generate, determine and/or define the EDMG-Header-B field, for example, to define an encoding procedure for an OFDM PHY, e.g., as described below.

In some demonstrative embodiments, device 102 may be configured to generate an EDMG MU PPDU addressed to a plurality of Stations (STAs), e.g., as described below.

In some demonstrative embodiments, the EDMG MU PPDU may include an EDMG Header B field, e.g., EDMG Header B field 216 (Fig. 2), corresponding to a respective STA of the plurality of STAs.

In some demonstrative embodiments, the EDMG-Header B field may be encoded based on a number of one or more 2.16 GHz channels, for example, over which the EDMG MU PPDU is to be transmitted, e.g., as described below.

In some demonstrative embodiments, the EDMG-Header B field may be encoded according to a number of space-time streams to be transmitted to the STA, e.g., as described below.

In some demonstrative embodiments, device 102 may be configured to transmit the EDMG MU PPDU over a channel bandwidth including the one or more 2.16GHz channels, e.g., as described below.

In some demonstrative embodiments, device 140 may be configured to receive and process the EDMG MU PPDU. For example, device 140 may process a data field of the EDMG MU PPDU based on the EDMG Header B field corresponding to the wireless station implemented by device 140, e.g., as described below.

In some demonstrative embodiments, controller 124 may be configured to cause, trigger, and/or control a wireless station implemented by device 102, e.g., an EDMG STA, to encode a sequence of EDMG Header B bits of an EDMG Header B field of an EDMG MU PHY PPDU into a Low Density Parity Check (LDPC) codeword, e.g., as described below.

For example, device 102 may encode the sequence of EDMG Header B bits of EDMG Header B field 216 (Fig. 2) of the EDMG PPDU 200 (Fig. 2) into the LDPC codeword.

In some demonstrative embodiments, controller 124 may be configured to cause, trigger, and/or control the wireless station implemented by device 102 to determine the LDPC codeword according to a scrambler seed initialized by first seven bits of the EDMG Header B bits, e.g., as described below.

In other embodiments, any other scrambler seed and/or scrambling scheme may be used.

In some demonstrative embodiments, controller 124 may be configured to cause, trigger, and/or control the wireless station implemented by device 102 to determine a data block including one or more repetitions of an encoded codeword, e.g., as described below.

In some demonstrative embodiments, a count of the one or more repetitions of the encoded codeword may be based on a count of one or more 2.16 GHz channels in a channel bandwidth for transmission of the EDMG MU PPDU, e.g., as described below.

In some demonstrative embodiments, the encoded codeword may include a concatenation of a plurality of encoded sequences, which are based on the LDPC codeword, e.g., as described below.

In some demonstrative embodiments, controller 124 may be configured to cause, trigger, and/or control the wireless station implemented by device 102 to determine one or more scrambled data blocks, e.g., as described below.

In some demonstrative embodiments, controller 124 may be configured to cause, trigger, and/or control the wireless station implemented by device 102 to determine the one or more scrambled data blocks by scrambling one or more respective repetitions of the data block, e.g., as described below.

In some demonstrative embodiments, a count of the one or more repetitions of the data block may be based on a count of one or more space-time streams for transmission of the EDMG MU PPDU, e.g., as described below.

In some demonstrative embodiments, the one or more scrambled data blocks may correspond to one or more respective space-time streams for transmission of the EDMG MU PPDU, e.g., as described below.

In some demonstrative embodiments, controller 124 may be configured to cause, trigger, and/or control the wireless station implemented by device 102 to map a first scrambled data block to a first space-time stream, and to map a second scrambled block to a second space-time stream, for example, when the EDMG PPDU is to be transmitted over the first and second space-time streams, e.g., as described below.

In some demonstrative embodiments, controller 124 may be configured to cause, trigger, and/or control the wireless station implemented by device 102 to modulate the one or more scrambled data blocks, e.g., as described below.

In some demonstrative embodiments, controller 124 may be configured to cause, trigger, and/or control the wireless station implemented by device 102 to transmit the EDMG MU PPDU over the channel bandwidth, e.g., as described below.

In some demonstrative embodiments, controller 124 may be configured to cause, trigger, and/or control the wireless station implemented by device 102 to transmit the EDMG MU PPDU over the channel bandwidth in a frequency band above 45GHz.

In some demonstrative embodiments, controller 124 may be configured to cause, trigger, and/or control the wireless station implemented by device 102 to transmit the EDMG MU PPDU over a channel bandwidth of 2.16GHz, 4.32GHz, 6.48GHz, or 8.64GHz.

In another example, device 102 may transmit the EDMG MU PPDU over any other channel bandwidth in any other frequency band.

In some demonstrative embodiments, controller 124 may be configured to cause, trigger, and/or control the wireless station implemented by device 102 to determine $N_{STS}$ scrambled data blocks by continuously scrambling $N_{STS}$ repetitions of the data block with a Pseudo-Noise (PN) sequence without seed reset, wherein $N_{STS} \geq 1$ denotes the count of the one or more space-time streams, e.g., as described below.

In some demonstrative embodiments, controller 124 may be configured to cause, trigger, and/or control the wireless station implemented by device 102 to determine the $N_{STS}$ scrambled data blocks according to an initial seed value $(1_1, 1_2, ..., 1_7)$, e.g., as described below.

In other embodiments, device 102 may determine the $N_{STS}$ scrambled data blocks according to any other additional or alternative parameter and/or initial seed.

In some demonstrative embodiments, controller 124 may be configured to cause, trigger, and/or control the wireless station implemented by device 102 to continuously scramble the $N_{STS}$ repetitions of the data block starting at a $225^{th}$ bit, e.g., as described below.

In other embodiments, device 102 may scramble the $N_{STS}$ repetitions of the data block starting at any other bit.

In some demonstrative embodiments, controller 124 may be configured to cause, trigger, and/or control the wireless station implemented by device 102 to encode the EDMG Header B field of the EDMG MU PPDU for a Single Carrier (SC) PHY, e.g., as described below.

In some demonstrative embodiments, the encoded codeword may include a concatenation of a first encoded sequence and a second encoded sequence, for example, when the EDMG Header B field is encoded for the SC PHY, e.g., as described below.

In some demonstrative embodiments, the LDPC codeword may include a sequence of scrambled bits based on the EDMG Header B bits, and a sequence of parity bits based on the sequence of scrambled bits, e.g., as described below.

For example, the first encoded sequence may include the sequence of scrambled bits followed by a first subset of the sequence of parity bits, and the second encoded sequence may include the sequence of scrambled bits followed by a second subset of the sequence of parity bits, which is different from the first subset of the sequence of parity bits, e.g., as described below.

In some demonstrative embodiments, the LDPC codeword may include 64 scrambled bits denoted $(bq_1, bq_2,..., bq_{64})$, 440 zero bits, and 168 parity bits denoted $(p_1, p_2,..., p_{168})$, e.g., as described below.

In some demonstrative embodiments, for example, when the EDMG Header B field is encoded for the SC PHY, the encoded codeword may be defined as $c=(c_1, c_2)$, e.g., wherein:

$$c_1 = (bq_1, bq_2, ..., bq_{64}, p_1, p_2, ..., p_{160})$$

$$c_2 = (bq_1, bq_2, ..., bq_{64}, p_1, p_2, ..., p_{152}, p_{161}, p_{162}, ..., p_{168}).$$

In some demonstrative embodiments, controller 124 may be configured to cause, trigger, and/or control the wireless station implemented by device 102 to determine the data block, denoted $cb$, based on the encoded codeword, denoted c, and the count of the one or more 2.16GHz channels, denoted $N_{CB}$, e.g., as follows:

$$cb=c \text{ for } N_{CB}=1;$$

$$cb=(c, c) \text{ for } N_{CB}=2;$$

$$cb=(c, c, c) \text{ for } N_{CB}=3;$$

and

$$cb=(c, c, c, c) \text{ for } N_{CB}=4.$$

In some demonstrative embodiments, controller 124 may be configured to cause, trigger, and/or control the wireless station implemented by device 102 to continuously scramble $N_{STS}$ repetitions of the data block starting at a $225^{th}$ bit and ending at a $(N_{STS} \times 448 \times N_{CB})^{th}$ bit, wherein $N_{STS} \geq 1$ denotes the count of the one or more space-time streams, e.g., as described below.

In some demonstrative embodiments, controller 124 may be configured to cause, trigger, and/or control the wireless station implemented by device 102 to modulate the one or more scrambled data blocks according to a $\pi/2$ Binary Phased Shift Keying ($\pi/2$-BPSK) modulation, e.g., as described below.

In other embodiments, device 102 may modulate the one or more scrambled data blocks according to any other additional or alternative modulation scheme.

In some demonstrative embodiments according to the claimed invention, the EDMG Header B field for an $i_{user}$-th user for the SC PHY, e.g., EDMG Header B field 216 (Fig. 2), may be encoded, e.g., using one or more of the following operations:

- The input 64 bits of the EDMG-Header-B field, denoted $b$ = ($b_1$, $b_2$, ..., $b_{64}$), may be scrambled with a PN sequence, for example, as described in Section 20.3.9 of the *IEEE 802.11-2016 Specification* and/or according to any other scrambling scheme, starting from the eighth bit, for example, to create a $bq=(bq_1, bq_2,...,bq_{64})$ sequence. For example, the scrambler seed value may be initialized by the first seven bits of EDMG-Header-B field.

- The LDPC codeword of length 672 bits may be created by concatenating the 440 zeros to the scrambled header bits $bq=(bq_1, bq_2,...,bq_{64})$ and then computing 168 parity bits, *denoted $p=(p_1, p_2,...,p_{168})$*, for example, by using an LDPC matrix with $R = \frac{3}{4}$ and $L_{CW} = 672$, e.g., as defined in Section 20.3.8.4 of the *IEEE 802.11-2016 Specification* and/or according to any other LDPC encoding scheme. The LDPC codeword may be defined, e.g., as follows: $(bq_1, bq_2,...,bq_{64}, 0_1, 0_2, ..., 0_{440}, p_1, p_2,...,p_{168})$.

- The zero padded bits may be discarded, and the output codeword may be defined as $c=(c_1, c_2)$, e.g., wherein:

$$c_1 = (bq_1, bq_2, ..., bq_{64}, p_1, p_2, ..., p_{160})$$

$$c_2 = (bq_1, bq_2, ..., bq_{64}, p_1, p_2, ..., p_{152}, p_{161}, p_{162}, ..., p_{168}).$$

- For an EDMG PPDU, which is transmitted over a $N_{CB} \times 2.16$ GHz channel, wherein $1 \leq N_{CB} \leq 4$, the data block may be defined, for example, as a repetition of codeword c by $N_{CB}$ times:

$$cb = c \text{ for } N_{CB} = 1$$

$$cb = (c, c) \text{ for } N_{CB} = 2$$

$$cb = (c, c, c) \text{ for } N_{CB} = 3$$

$$cb = (c, c, c, c) \text{ for } N_{CB} = 4$$

- For an EDMG PPDU, which is transmitted using $N_{STS}$ ($N_{STS} \geq 2$) space-time streams, the data block $cb$ may be repeated $N_{STS}$ times. Then the $N_{STS}$ data blocks may be scrambled continuously with the PN sequence, e.g., as defined in Section 30.5.8.3.2 of an *IEEE 802.11ay Specification* and/or according to any other scrambling scheme, without seed reset. The initial seed value may be equal to all ones ($1_1$, $1_2$, ..., $1_7$). The scrambling may start at the 225-th bit and end at the ($N_{STS} \times 448 \times N_{CB}$)-th bit. The first scrambled $cb$ block may be mapped to the first space-time stream, the second scrambled $cb$ block to the second space-time stream and so on.

- The SC data blocks may be modulated using $\pi/2$-BPSK modulation, e.g., as defined in Section 20.6.3.2.4 of the *IEEE 802.11-2016 Specification* or any other modulation scheme. Each SC data block may be prepended with a guard interval, e.g., as defined in Section 30.5.8.2.4 of the *IEEE 802.11ay Specification* and/or any other GI scheme.

In other embodiments, any other additional or alternative encoding scheme and/or operations may be implemented to encode the EDMG Header B field.

In some demonstrative embodiments, controller 124 may be configured to cause, trigger, and/or control the wireless station implemented by device 102 to encode the EDMG Header B field of the EDMG MU PPDU for an Orthogonal Frequency-Division Multiplexing (OFDM) PHY, e.g., as described below.

In some demonstrative embodiments, the encoded codeword may include a concatenation of a first encoded sequence, a second encoded sequence, and a third encoded sequence, for example, when the EDMG Header B field is encoded for the OFDM PHY, e.g., as described below.

In some demonstrative embodiments, the LDPC codeword may include a sequence of scrambled bits based on the EDMG Header B bits, and a sequence of parity bits based on the sequence of scrambled bits, e.g., as described below.

For example, the first encoded sequence may include the sequence of scrambled bits followed by a first subset of the sequence of parity bits, the second encoded sequence may include the sequence of scrambled bits followed by a second subset of the sequence of parity bits, which is different from the first subset of the sequence of parity bits, and the third encoded sequence may include the sequence of scrambled bits followed by a third subset of the sequence of parity bits, which is different from the first and second subsets of the sequence of parity bits.

In some demonstrative embodiments, the LDPC codeword may include 64 scrambled bits denoted $(bq_1, bq_2,..., bq_{64})$, 440 zero bits, and 168 parity bits denoted $(p_1, p_2,..., p_{168})$, e.g., as described below.

In some demonstrative embodiments, the encoded codeword may be defined as $c=(c_1, c_2, c_3)$, e.g., wherein:

$$c_1 = (bq_1, bq_2, ..., bq_{64}, p_9, p_{10}, ..., p_{168})$$

$$c_2 = (bq_1, bq_2, ..., bq_{64}, p_1, p_2, ..., p_{84}, p_{93}, p_{94}, ..., p_{168})$$

$$c_3 = (bq_1, bq_2, ..., bq_{64}, p_1, p_2, ..., p_{160}).$$

In some demonstrative embodiments, controller 124 may be configured to cause, trigger, and/or control the wireless station implemented by device 102 to determine the data block, denoted $cb$, based on the encoded codeword, denoted c, and the count of the one or more 2.16GHz channels, denoted $N_{CB}$, e.g., as follows:

$cb=c$ for $N_{CB}=1$;
$cb=(c, c, c_{1:124})$ for $N_{CB}=2$;
$cb=(c, c, c, c_{1:252})$ for $N_{CB}=3$; and
$cb=(c, c, c, c, c_{1:376})$ for $N_{CB}=4$.

In some demonstrative embodiments, controller 124 may be configured to cause, trigger, and/or control the wireless station implemented by device 102 to continuously scramble $N_{STS}$ repetitions of the data block starting at a $225^{th}$ bit and ending at a $(N_{STS} \times 2 \times N_{SD})^{th}$ bit, wherein $N_{STS} \geq 1$ denotes the count of the one or more space-time streams, and $N_{SD}$ denotes a number of data subcarriers, e.g., as described below.

In some demonstrative embodiments, controller 124 may be configured to cause, trigger, and/or control the wireless station implemented by device 102 to modulate the one or more scrambled data blocks according to a Quadrature Phase-Shift Keying (QPSK) modulation with Static Tone Pairing (STP), e.g., as described below.

In other embodiments, device 102 may modulate the one or more scrambled data blocks according to any other additional or alternative modulation scheme.

In some demonstrative embodiments, the EDMG Header B field for an $i_{user}$-th user for the OFDM PHY, e.g., EDMG Header B field 216 (Fig. 2), may be encoded, e.g., using one or more of the following operations:

- The input 64 bits of the EDMG-Header-B field, denoted $b = (b_1, b_2, ..., b_{64})$, may be scrambled with a PN sequence, for example, as described in Section 20.3.9 of the *IEEE 802.11-2016 Specification* and/or according to any other scrambling scheme, starting from the eighth bit, for example, to create $bq=(bq_1, bq_2,...,bq_{64})$ sequence. The scrambler seed value may be initialized by the first seven bits of EDMG-Header-B field.
- The LDPC codeword of length 672 bits may be created by concatenating the 440 zeros to the scrambled header bits $bq=(bq_1, bq_2,...,bq_{64})$ and then computing 168 parity bits, *denoted* $p=(p_1, p_2,...,p_{168})$, for example, by using an LDPC matrix with $R = \frac{3}{4}$ and $L_{CW} = 672$, for example, as defined in Section 20.3.8.4 of the *IEEE 802.11-2016 Specification* and/or according to any other LDPC encoding scheme. The LDPC codeword may be defined, e.g., as follows:
  $(bq_1, bq_2,...,bq_{64}, 0_1, 0_2, ..., 0_{440}, p_1, p_2,...,p_{168}).$
- The zero padded bits may be discarded, and the output codeword may be defined as $c=(c_1, c_2, c_3)$, e.g., wherein:

$$c_1 = (bq_1, bq_2, ..., bq_{64}, p_9, p_{10}, ..., p_{168})$$

$$c_2 = (bq_1, bq_2, ..., bq_{64}, p_1, p_2, ..., p_{84}, p_{93}, p_{94}, ..., p_{168})$$

$$c_3 = (bq_1, bq_2, ..., bq_{64}, p_1, p_2, ..., p_{160}).$$

- For an EDMG PPDU, which is transmitted over a $N_{CB} \times 2.16$ GHz channel, wherein $1 \leq N_{CB} \leq 4$, the data block may be defined, for example, as a repetition of codeword c bits, e.g., as follows:

$$cb = c \text{ for } N_{CB} = 1$$

$$cb = (c, c, c_{1:124}) \text{ for } N_{CB} = 2$$

$$cb = (c, c, c, c_{1:252}) \text{ for } N_{CB} = 3$$

$$cb = (c, c, c, c, c_{1:376}) \text{ for } N_{CB} = 4,$$

wherein the $c_{1:m}$ notation defines an array of vector c elements, starting from the first bit (inclusive) and ending at the m-th bit (inclusive).
- For an EDMG PPDU, which is transmitted using $N_{STS}$ ($N_{STS} \geq 1$) space-time streams, the data block **cb** may be repeated $N_{STS}$ times. Then the $N_{STS}$ data blocks may be scrambled continuously with the PN sequence, e.g., as defined in Section 30.5.8.3.2 of the *IEEE 802.11ay Specification* and/or according to any other scrambling scheme, without seed reset. The initial seed value may be equal to all ones ($1_1, 1_2, ..., 1_7$). The scrambling may start at the 225-th bit and end at the ($N_{STS} \times 2 \times N_{SD}$)-th bit. The first scrambled **cb** block may be mapped to the first space-time stream, the second scrambled **cb** block to the second space-time stream and so on.
- The data blocks may be modulated, for example, by using QPSK modulation with STP. The EDMG-Header-B field may use an OFDM modulation, for example, as defined for the data part of the EDMG PPDU in Section 30.6.7.2 of the *IEEE 802.11ay Specification* and/or according to any other modulation scheme.

In other embodiments, any other additional or alternative encoding scheme and/or operations may be implemented to encode the EDMG Header B field.

In some demonstrative embodiments, controller 154 may be configured to cause, trigger, and/or control a wireless station implemented by device 140, e.g., an EDMG STA, to receive from device 102 the EDMG MU PPDU over a channel bandwidth including one or more 2.16GHz channels.

In some demonstrative embodiments, controller 154 may be configured to cause, trigger, and/or control the wireless station implemented by device 140 to decode the EDMG Header B field corresponding to the STA in the EDMG MU PPDU.

In some demonstrative embodiments, the EDMG-Header B field may be encoded based on the count of space-time streams to the STA and the count of the one or more 2.16 GHz channels.

In some demonstrative embodiments, device 140 may decode EDMG Header B field 216 (Fig. 2) corresponding to device 140 in EDMG PPDU 200 (Fig. 2).

In some demonstrative embodiments, controller 154 may be configured to cause, trigger, and/or control the wireless station implemented by device 140 to process a data field of the EDMG MU PPDU based on the EDMG Header B field corresponding to the STA in the EDMG MU PPDU, e.g., a STA implemented by device 140.

For example, device 140 may process data field 218 (Fig. 2) based on EDMG Header B field 216 (Fig. 2) corresponding to device 140.

In some demonstrative embodiments, the EDMG Header B field may include a scrambler initial seed value, e.g., as described above.

In some demonstrative embodiments, controller 154 may be configured to cause, trigger, and/or control the wireless station implemented by device 140 to process the data field of the EDMG MU PPDU based on the scrambler initial seed value.

For example, device 140 may process data field 218 (Fig. 2) based on the first seven bits of the EDMG Header B field.

In some demonstrative embodiments, the EDMG MU PPDU may include a SC EDMG MU PPDU, e.g., as described above.

In some demonstrative embodiments, controller 154 may be configured to cause, trigger, and/or control the wireless station implemented by device 140 to demodulate the EDMG Header B field according to a $\pi/2$-BPSK modulation, for example, when the EDMG MU PPDU includes the SC EDMG MU PPDU.

In other embodiments, device 140 may demodulate the EDMG Header B field according to any other demodulation scheme.

In some demonstrative embodiments, the EDMG MU PPDU may include an OFDM EDMG MU PPDU, e.g., as described above.

In some demonstrative embodiments, controller 154 may be configured to cause, trigger, and/or control the wireless station implemented by device 140 to demodulate the EDMG Header B field according to a QPSK modulation with STP, for example, when the EDMG MU PPDU includes the OFDM EDMG MU PPDU.

In other embodiments, device 140 may demodulate the EDMG Header B field according to any other demodulation scheme.

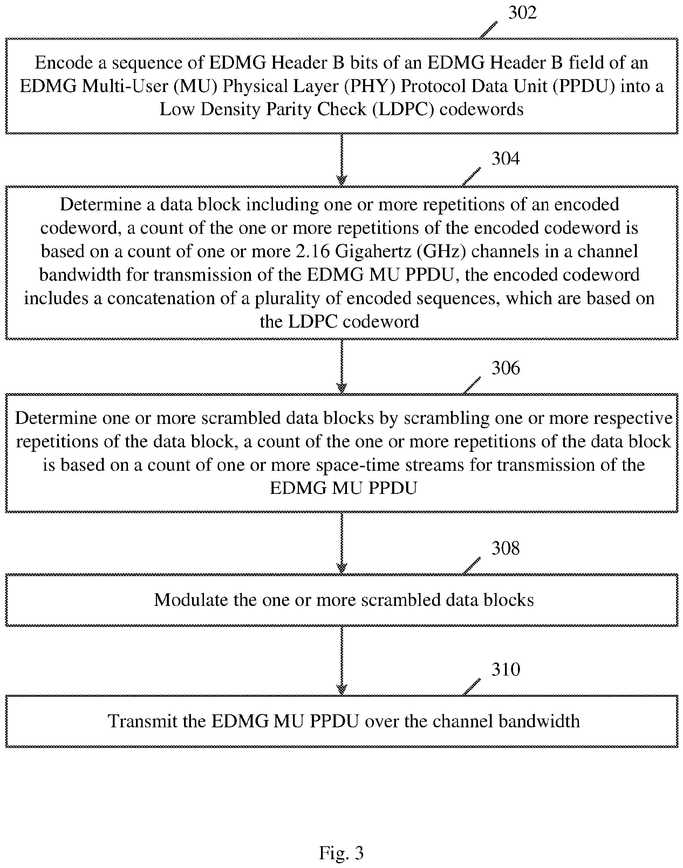

Reference is made to Fig. 3, which schematically illustrates a method of communicating an EDMG MU PPDU with a Header B field, in accordance with some demonstrative embodiments. For example, one or more of the operations of the method of Fig. 3 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 302, the method may include encoding a sequence of EDMG Header B bits of an EDMG Header B field of an EDMG MU PPDU into an LDPC codeword. For example, controller 124 (Fig. 1) may be configured to cause, trigger, and/or control the wireless station implemented by device 102 (Fig. 1) to encode the sequence of EDMG Header B bits of the EDMG Header B field of the EDMG MU PPDU into the LDPC codeword, e.g., as described above.

As indicated at block 304, the method may include determining a data block including one or more repetitions of an encoded codeword, a count of the one or more repetitions of the encoded codeword is based on a count of one or more 2.16 GHz channels in a channel bandwidth for transmission of the EDMG MU PPDU. For example, controller 124 (Fig. 1) may be configured to cause, trigger, and/or control the wireless station implemented by device 102 (Fig. 1) to determine the data block including the one or more repetitions of the encoded codeword, e.g., as described above.

In some demonstrative embodiments, the encoded codeword may include a concatenation of a plurality of encoded sequences, which may be based on the LDPC codeword, e.g., as described above.

As indicated at block 306, the method may include determining one or more scrambled data blocks by scrambling one or more respective repetitions of the data block. For example, controller 124 (Fig. 1) may be configured to cause, trigger, and/or control the wireless station implemented by device 102 (Fig. 1) to determine the one or more scrambled data blocks by scrambling the one or more respective repetitions of the data block, e.g., as described above.

In some demonstrative embodiments, a count of the one or more repetitions of the data block may be based on a count of one or more space-time streams for transmission of the EDMG MU PPDU, e.g., as described above.

As indicated at block 308, the method may include modulating the one or more scrambled data blocks. For example, controller 124 (Fig. 1) may be configured to cause, trigger, and/or control the wireless station implemented by device 102 (Fig. 1) to modulate the one or more scrambled data blocks, e.g., as described above.

As indicated at block 310, the method may include transmitting the EDMG MU PPDU over the channel bandwidth. For example, controller 124 (Fig. 1) may be configured to cause, trigger, and/or control the wireless station implemented by device 102 (Fig. 1) to transmit the EDMG MU PPDU over the channel bandwidth, e.g., as described above.

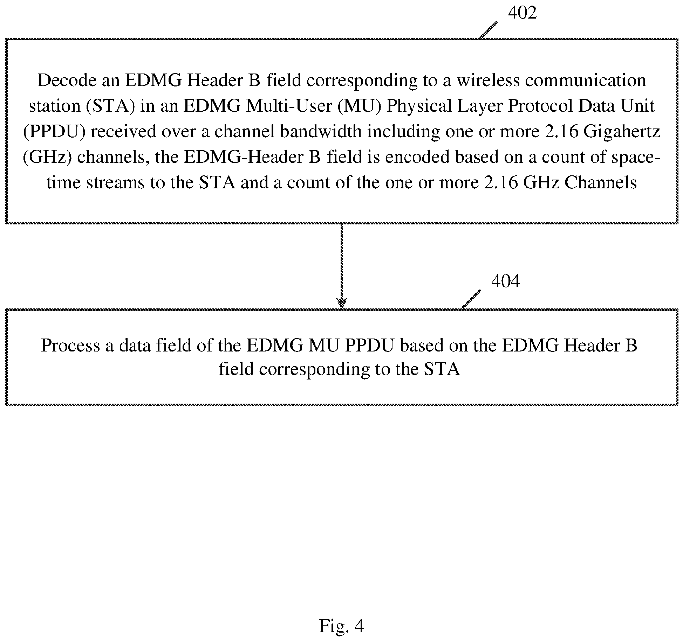

Reference is made to Fig. 4, which schematically illustrates a method of communicating an EDMG MU PPDU with a Header B field, in accordance with some demonstrative embodiments. For example, one or more of the operations of the method of Fig. 4 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 402, the method may include decoding at a STA an EDMG Header B field corresponding to the STA in an EDMG MU PPDU received over a channel bandwidth including one or more 2.16 GHz channels. For example, controller 154 (Fig. 1) may be configured to cause, trigger, and/or control a wireless station implemented by device 140 (Fig. 1) to decode the EDMG Header B field corresponding to device 140 (Fig. 1) in the EDMG MU PPDU received over the channel bandwidth including one or more 2.16 GHz channels, e.g., as described above.

In some demonstrative embodiments, the EDMG-Header B field may be encoded based on a count of space-time streams to the STA and a count of the one or more 2.16 GHz Channels, e.g., as described above.

As indicated at block 404, the method may include processing a data field of the EDMG MU PPDU based on the EDMG Header B field corresponding to the STA. For example, controller 154 (Fig. 1) may be configured to cause, trigger, and/or control the wireless station implemented by device 140 (Fig. 1) to process the data field of the EDMG MU PPDU based on the EDMG Header B field 216 (Fig. 2) corresponding to device 140 (Fig. 1), e.g., as described above.

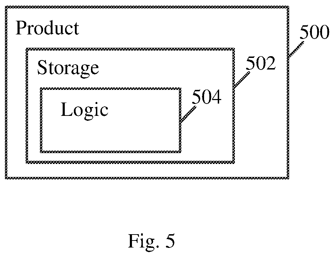

Reference is made to Fig. 5, which schematically illustrates a product of manufacture 500, in accordance with some demonstrative embodiments. Product 500 may include one or more tangible computer-readable ("machine-readable") non-transitory storage media 502, which may include computer-executable instructions, e.g., implemented by logic 504, operable to, when executed by at least one computer processor, enable the at least one computer processor to implement one or more operations at device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to cause device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1) to perform, trigger and/or implement one or more operations and/or functionalities, and/or to perform, trigger and/or implement one or more operations and/or functionalities described with reference to the Figs. 1, 2, 3, and/or 4, and/or one or more operations described herein. The phrases "non-transitory machine-readable medium" and "computer-readable non-transitory storage media" may be directed to include all computer-readable media, with the sole exception being a transitory propagating signal.

In some demonstrative embodiments, product 500 and/or machine readable storage media 502 may include one or more types of computer-readable storage media capable of storing data, including volatile memory, non-volatile memory, removable or non-removable memory, erasable or non-erasable memory, writeable or rewriteable memory, and the like. For example, machine readable storage media 502 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 504 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 504 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

**Claims**

1. A method to be performed at an Enhanced Directional Multi-Gigabit, DMG, EDMG, wireless communication station (102), STA, the method comprising:

   encoding (302) a sequence of EDMG Header B bits of an EDMG Header B (216) field of an EDMG Multi-User, MU, Physical Layer, PHY, Protocol Data Unit (200), PPDU, into a Low Density Parity Check, LDPC, codeword and determining an encoded codeword comprising a concatenation of a plurality of encoded sequences, which are based on the LDPC codeword; and **characterized by**:

   determining (304) a data block comprising one or more repetitions of the encoded codeword, a count of the one or more repetitions of the encoded codeword is based on a count of one or more 2.16 Gigahertz, GHz, channels in a channel bandwidth for transmission of the EDMG MU PPDU (200), wherein the method comprises determining a data block comprising two or more repetitions of the encoded codeword for a count of 2.16 GHz channels in the channel bandwidth being two or more;

determining (306) two or more scrambled data blocks by scrambling $N_{STS}$ repetitions of the data block with a Pseudo-Noise, PN, sequence without seed reset, wherein $N_{STS} \geq 2$ denotes a count of the two or more space-time streams for transmission of the EDMG MU PPDU (200);

mapping a first scrambled data block of the two or more scrambled data blocks to a first space-time stream of the two or more respective space-time streams and a second scrambled data block of the two or more scrambled data blocks, to a second space-time stream of the two or more respective space-time streams;

modulating (308) the mapped scrambled data blocks; and

transmitting (310) the EDMG MU PPDU (200) comprising the modulated data blocks over the channel bandwidth

2. The method of claim 1 comprising encoding the EDMG Header B field (216) for a Single Carrier, SC, PHY.

3. The method of claim 2, wherein the encoded codeword comprises a concatenation of a first encoded sequence and a second encoded sequence.

4. The method of claim 3, wherein the LDPC codeword comprises a sequence of scrambled bits based on the EDMG Header B bits, and a sequence of parity bits based on the sequence of scrambled bits, the first encoded sequence comprises the sequence of scrambled bits followed by a first subset of the sequence of parity bits, and the second encoded sequence comprises the sequence of scrambled bits followed by a second subset of the sequence of parity bits, which is different from the first subset of the sequence of parity bits.

5. The method of claim 3 or 4, wherein the LDPC codeword comprises 64 scrambled bits denoted $(bq_1, bq_2, ..., bq_{64})$, 440 zero bits, and 168 parity bits denoted $(Pi, p_2, ..., p_{168})$, and the encoded codeword is $c=(c_1, c_2)$, wherein:

$$c_1 = (bq_1, bq_2, ..., bq_{64}, p_1, p_2, ..., p_{160})$$

$$c_2 = (bq_1, bq_2, ..., bq_{64}, p_1, p_2, ..., p_{152}, p_{161}, p_{162}, ..., p_{168}).$$

6. The method of any one of claims 2-5 comprising determining the data block, denoted cb, based on the encoded codeword, denoted c, and the count of the one or more 2.16GHz channels, denoted $N_{CB}$, as follows:

$$cb=c \text{ for } N_{CB}=1;$$

$$cb=(c,c) \text{ for } N_{CB}=2;$$

$$cb=(c,c,c) \text{ for } N_{CB}=3;$$

and

$$cb=(c,c,c,c) \text{ for } N_{CB}=4.$$

7. The method of claim 6 comprising continuously scrambling the $N_{STS}$ repetitions of the data block starting at a $225^{th}$ bit and ending at a $(N_{STS} \times 448 \times N_{CB})^{th}$ bit.

8. The method of claim 1 comprising encoding the EDMG Header B field (216) for an Orthogonal Frequency-Division Multiplexing, OFDM, PHY.

9. The method of claim 8, wherein the encoded codeword comprises a concatenation of a first encoded sequence, a second encoded sequence, and a third encoded sequence.

10. The method of claim 9, wherein the LDPC codeword comprises a sequence of scrambled bits based on the EDMG Header B bits, and a sequence of parity bits based on the sequence of scrambled bits, the first encoded sequence comprises the sequence of scrambled bits followed by a first subset of the sequence of parity bits, the second encoded sequence comprises the sequence of scrambled bits followed by a second subset of the sequence of parity bits, which is different from the first subset of the sequence of parity bits, and the third encoded sequence comprises the sequence of scrambled bits followed by a third subset of the sequence of parity bits, which is different from the first and second subsets of the sequence of parity bits.

11. The method of any one of claims 1-10 comprising determining the LDPC codeword according to a scrambler seed initialized by first seven bits of the EDMG Header B bits.

12. An Enhanced Directional Multi-Gigabit, DMG, EDMG, wireless communication station (102), STA, comprising means to perform the method of any one of claims 1-11.

13. The EDMG STA of claim 12 comprising a radio (114) to transmit the EDMG MU PPDU (200), one or more antennas (107) connected to the radio (114), a memory (194), and a processor (191).

14. A product (500) comprising one or more tangible computer-readable non-transitory storage media (502) comprising computer-executable instructions (504) operable to, when executed by at least one processor (191) of an Enhanced Directional Multi-Gigabit, DMG, EDMG, wireless communication station (102) STA, cause the EDMG STA to perform the method of any one of claims 1-11.

**Patentansprüche**

1. Verfahren, das an einer drahtlosen erweiterten gerichteten Multi-Gigabit- bzw. DMG- bzw. EDMG-Kommunikationsstation (102), STA, durchzuführen ist, das Verfahren umfassend:
   Codieren (302) einer Abfolge von EDMG-Kopfzeilen-B-Bits eines EDMG-Kopfzeilen-B-Felds (216) einer EDMG-Mehrbenutzer- bzw. -MU-Protokolldateneinheit der physikalischen Schicht, PHY, (200), PPDU, zu einem Codewort für Paritätsprüfung niedriger Dichte, LDPC, und Bestimmen eines codierten Codeworts, umfassend eine Verkettung einer Vielzahl von codierten Abfolgen, die auf dem LDPC-Codewort basieren; und **gekennzeichnet durch**:

   Bestimmen (304) eines Datenblocks, umfassend eine oder mehrere Wiederholungen des codierten Codeworts, wobei eine Zählung der einen oder mehreren Wiederholungen des codierten Codeworts auf einer Zählung eines oder mehrerer 2,16-Gigahertz- bzw. -GHz-Kanäle in einer Kanalbandbreite zur Übertragung der EDMG-MU-PPDU (200) basiert, wobei das Verfahren Bestimmen eines Datenblocks umfasst, umfassend zwei oder mehr Wiederholungen des codierten Codeworts für eine Zählung von 2,16-GHz-Kanälen in der Kanalbandbreite, die zwei oder mehr beträgt;
   Bestimmen (306) von zwei oder mehr verwürfelten Datenblöcken durch Verwürfeln von $N_{STS}$ Wiederholungen des Datenblocks mit einer Pseudo-Rauschen- bzw. PN-Abfolge ohne Anfangswertrücksetzung, wobei $N_{STS} > 2$ eine Zählung der zwei oder mehr Raum-Zeit-Ströme zur Übertragung der EDMG-MU-PPDU (200) kennzeichnet;
   Abbilden eines ersten verwürfelten Datenblocks der zwei oder mehr verwürfelten Datenblöcke auf einen ersten Raum-Zeit-Strom der zwei oder mehr jeweiligen Raum-Zeit-Ströme und eines zweiten verwürfelten Datenblocks der zwei oder mehr verwürfelten Datenblöcke auf einen zweiten Raum-Zeit-Strom der zwei oder mehr jeweiligen Raum-Zeit-Ströme;
   Modulieren (308) der abgebildeten verwürfelten Datenblöcke; und
   Übertragen (310) der EDMG-MU-PPDU (200), umfassend die modulierten Datenblöcke, über die Kanalbandbreite.

2. Verfahren nach Anspruch 1, umfassend Codieren des EDMG-Kopfzeilen-B-Felds (216) für eine Einzelträger- bzw. SC-PHY.

3. Verfahren nach Anspruch 2, wobei das codierte Codewort eine Verkettung einer ersten codierten Abfolge und einer zweiten codierten Abfolge umfasst.

4. Verfahren nach Anspruch 3, wobei das LDPC-Codewort eine Abfolge von verwürfelten Bits basierend auf den EDMG-Kopfzeilen-B-Bits und eine Abfolge von Paritätsbits basierend auf der Abfolge von verwürfelten Bits umfasst, die erste codierte Abfolge die Abfolge von verwürfelten Bits umfasst, gefolgt von einer ersten Teilmenge der Abfolge von Paritätsbits, und die zweite codierte Abfolge die Abfolge von verwürfelten Bits umfasst, gefolgt von einer zweiten Teilmenge der Abfolge von Paritätsbits, die von der ersten Teilmenge der Abfolge von Paritätsbits verschieden ist.

5. Verfahren nach Anspruch 3 oder 4, wobei das LDPC-Codewort 64 verwürfelte Bits, gekennzeichnet als ($bq_1$, $bq_2$, ..., $bq_{64}$), 440 Nullbits und 168 Paritätsbits, gekennzeichnet als ($p_1$, $p_2$, ..., $p_{168}$), umfasst und das codierte Codewort $c=(c_1, c_2)$ ist, wobei:

$$c_1 = (bq_1, bq_2, ..., bq_{64}, p_1, p_2, ..., p_{160})$$

$$c_2 = (bq_1, bq_2, ..., bq_{64}, p_1, p_2, ..., p_{152}, p_{161}, p_{162}, ..., p_{168}).$$

6. Verfahren nach einem der Ansprüche 2-5, umfassend Bestimmen des Datenblocks, gekennzeichnet als cb, basierend auf dem codierten Codewort, gekennzeichnet als c, und der Zählung des einen oder der mehreren 2,16-GHz-Kanäle, gekennzeichnet als $N_{CB}$, wie folgt:

cb=c für $N_{CB}$=1;
cb=(c,c) für $N_{CB}$=2;
cb=(c,c,c) für $N_{CB}$=3; und
cb=(c,c,c,c) für $N_{CB}$=4.

7. Verfahren nach Anspruch 6, umfassend kontinuierliches Verwürfeln der $N_{STS}$ Wiederholungen der Datenblöcke beginnend bei einem 225-ten Bit und endend bei einem ($N_{STS} \times 448 \times N_{CB}$)-ten Bit.

8. Verfahren nach Anspruch 1, umfassend Codieren des EDMG-Kopfzeilen-B-Felds (216) für eine Orthogonal-Frequenz-Multiplexing- bzw. OFDM-PHY.

9. Verfahren nach Anspruch 8, wobei das codierte Codewort eine Verkettung einer ersten codierten Abfolge, einer zweiten codierten Abfolge und einer dritten codierten Abfolge umfasst.

10. Verfahren nach Anspruch 9, wobei das LDPC-Codewort eine Abfolge von verwürfelten Bits basierend auf den EDMG-Kopfzeilen-B-Bits und eine Abfolge von Paritätsbits basierend auf der Abfolge von verwürfelten Bits umfasst, die erste codierte Abfolge die Abfolge von verwürfelten Bits umfasst, gefolgt von einer ersten Teilmenge der Abfolge von Paritätsbits, die zweite codierte Abfolge die Abfolge von verwürfelten Bits umfasst, gefolgt von einer zweiten Teilmenge der Abfolge von Paritätsbits, die von der ersten Teilmenge der Abfolge von Paritätsbits verschieden ist, und die dritte codierte Abfolge die Abfolge von verwürfelten Bits umfasst, gefolgt von einer dritten Teilmenge der Abfolge von Paritätsbits, die von der ersten und zweiten Teilmenge der Abfolge von Paritätsbits verschieden ist.

11. Verfahren nach einem der Ansprüche 1-10, umfassend Bestimmen des LDPC-Codeworts gemäß einem Verwürfler-Anfangswert, initialisiert durch die ersten sieben Bits der EDMG-Kopfzeilen-B-Bits.

12. Drahtlose erweiterte gerichtete Multi-Gigabit- bzw. DMG- bzw. EDMG-Kommunikationsstation (102), STA, umfassend Mittel zum Durchführen des Verfahrens nach einem der Ansprüche 1-11.

13. EDMG-STA nach Anspruch 12, umfassend eine Funkvorrichtung (114) zum Übertragen der EDMG-MU-PPDU (200), eine oder mehrere Antennen (107), die mit der Funkvorrichtung (114) verbunden sind, einen Speicher (194) und einen Prozessor (191).

14. Produkt (500), umfassend ein oder mehrere materielle, computerlesbare, nichtflüchtige Speichermedien (502), umfassend computerausführbare Anweisungen (504), die funktionsfähig sind, wenn sie durch mindestens einen Prozessor (191) einer drahtlosen erweiterten gerichteten Multi-Gigabit- bzw. DMG- bzw. EDMG-Kommunikationsstation (102), STA, ausgeführt werden, die EDMG-STA zu veranlassen, das Verfahren nach einem der Ansprüche 1-11 durchzuführen.

**Revendications**

1. Procédé destiné être réalisé au niveau d'une station, notée STA, de communication sans fil de type directionnel multi-gigabit, noté DMG, amélioré, noté EDMG, (102), le procédé comprenant :

   le codage (302) d'une séquence de bits d'en-tête B EDMG d'un champ d'en-tête B EDMG (216) d'une unité de données de protocole de couche physique, notée PHY, notée PPDU, multi-utilisateur, noté MU, EDMG (200) dans un mot de code de contrôle de parité de faible densité, noté LDPC, et la détermination d'un mot de code codé comprenant une concaténation d'une pluralité de séquences codées, lesquelles sont basées sur le mot de code LDPC ; et **caractérisé par** :
   la détermination (304) d'un bloc de données comprenant une ou plusieurs répétitions du mot de code codé, un compte des une ou plusieurs répétitions du mot de code codé étant basé sur un compte d'un ou de plusieurs canaux de 2,16 gigahertz, notés GHz, dans une largeur de bande de canal pour la transmission de la PPDU MU EDMG (200), le procédé comprenant la détermination d'un bloc de données comprenant au moins deux répétitions du mot de code codé pour un compte de canaux de 2,16 GHz dans la largeur de bande de canal supérieur ou égal à deux ;
   la détermination (306) d'au moins deux blocs de données embrouillés par embrouillage de $N_{STS}$ répétitions du bloc de données avec une séquence de pseudo-bruit, noté PN, sans réinitialisation de germe, $N_{STS} \geq 2$ désignant un compte des au moins deux flux espace-temps pour la transmission de la PPDU MU EDMG (200) ;
   le mappage d'un premier bloc de données embrouillé des au moins deux blocs de données embrouillés sur un premier flux espace-temps des au moins deux flux espace-temps respectifs et d'un deuxième bloc de données embrouillé des au moins deux blocs de données embrouillés sur un deuxième flux espace-temps des au moins deux flux espace-temps respectifs ;
   la modulation (308) des blocs de données embrouillés mappés ; et
   la transmission (310) de la PPDU MU EDMG (200) comprenant les blocs de données modulés sur la largeur de bande de canal.

2. Procédé selon la revendication 1, comprenant le codage du champ d'en-tête B EDMG (216) pour une PHY monoporteuse, notée SC.

3. Procédé selon la revendication 2, le mot de code codé comprenant une concaténation d'une première séquence codée et d'une deuxième séquence codée.

4. Procédé selon la revendication 3, le mot de code LDPC comprenant une séquence de bits embrouillés basée sur les bits d'en-tête B EDMG, et une séquence de bits de parité basée sur la séquence de bits embrouillés, la première séquence codée comprenant la séquence de bits embrouillés suivie d'un premier sous-ensemble de la séquence de bits de parité, et la deuxième séquence codée comprenant la séquence de bits embrouillés suivie d'un deuxième sous-ensemble de la séquence de bits de parité, lequel est différent du premier sous-ensemble de la séquence de bits de parité.

5. Procédé selon la revendication 3 ou 4, le mot de code LDPC comprenant 64 bits embrouillés désignés ($bq_1, bq_2, ... , bq_{64}$), 440 bits zéro et 168 bits de parité désignés ($p_1, p_2, ... , p_{168}$), et le mot de code codé étant noté $c = (c_1, c_2)$,

$$c_1 = (bq_1, bq_2, ..., bq_{64}, p_1, p_2, ..., p_{160})$$

$$c_2 = (bq_1, bq_2, ..., bq_{64}, p_1, p_2, ..., p_{152}, p_{161}, p_{162}, ..., p_{168}).$$

6. Procédé selon l'une quelconque des revendications 2 à 5, comprenant la détermination du bloc de données, désigné cb, sur la base du mot de code codé, désigné c, et du compte des un ou plusieurs canaux de 2,16 GHz, désignés $N_{CB}$, comme suit :

   cb=c pour $N_{CB}$=1 ;
   cb=(c,c) pour $N_{CB}$=2 ;
   cb=(c,c,c) pour $N_{CB}$=3 ; et
   cb=(c,c,c,c) pour $N_{CB}$=4.

**7.** Procédé selon la revendication 6, comprenant l'embrouillage continu des $N_{STS}$ répétitions du bloc de données en commençant à un 225-ième bit et en terminant à un $(N_{STS} \times 448 \times N_{CB})$-ième bit.

**8.** Procédé selon la revendication 1, comprenant le codage du champ d'en-tête B EDMG (216) pour une PHY à multiplexage par répartition orthogonale de la fréquence, noté OFDM.

**9.** Procédé selon la revendication 8, le mot de code codé comprenant une concaténation d'une première séquence codée, d'une deuxième séquence codée et d'une troisième séquence codée.

**10.** Procédé selon la revendication 9, le mot de code LDPC comprenant une séquence de bits embrouillés basée sur les bits d'en-tête B EDMG, et une séquence de bits de parité basée sur la séquence de bits embrouillés, la première séquence codée comprenant la séquence de bits embrouillés suivie d'un premier sous-ensemble de la séquence de bits de parité, la deuxième séquence codée comprenant la séquence de bits embrouillés suivie d'un deuxième sous-ensemble de la séquence de bits de parité, lequel est différent du premier sous-ensemble de la séquence de bits de parité, et la troisième séquence codée comprenant la séquence de bits embrouillés suivie d'un troisième sous-ensemble de la séquence de bits de parité, lequel est différent des premier et deuxième sous-ensembles de la séquence de bits de parité.

**11.** Procédé selon l'une quelconque des revendications 1 à 10, comprenant la détermination du mot de code LDPC selon un germe d'embrouilleur initialisé par les sept premiers bits des bits d'en-tête B EDMG.

**12.** Station, notée STA, de communication sans fil de type directionnel multi-gigabit, noté DMG, amélioré, noté EDMG, (102), comprenant des moyens de réalisation du procédé selon l'une quelconque des revendications 1 à 11.

**13.** STA EDMG selon la revendication 12, comprenant une radio (114) pour émettre la PPDU MU EDMG (200), une ou plusieurs antennes (107) connectées à la radio (114), une mémoire (194) et un processeur (191).

**14.** Produit (500) comprenant un ou plusieurs supports de stockage tangibles non transitoires lisibles par ordinateur (502) comprenant des instructions exécutables par ordinateur (504) utilisables pour, lorsqu'elles sont exécutées par au moins un processeur (191) d'une station, notée STA, de communication sans fil de type directionnel multi-gigabit, noté DMG, amélioré, noté EDMG, (102), amener la STA EDMG à réaliser le procédé selon l'une quelconque des revendications 1 à 11.

Fig. 1

EP 3 602 989 B1

210                                                                 220

| L-STF | L-CEF | L-Header | EDMG-Header-A | EDMG-STF | EDMG-CEF | EDMG-Header-B | Data | TRN |

202   204   206        208            212          214            216          218    224

200

Fig. 2

302

Encode a sequence of EDMG Header B bits of an EDMG Header B field of an EDMG Multi-User (MU) Physical Layer (PHY) Protocol Data Unit (PPDU) into a Low Density Parity Check (LDPC) codewords

304

Determine a data block including one or more repetitions of an encoded codeword, a count of the one or more repetitions of the encoded codeword is based on a count of one or more 2.16 Gigahertz (GHz) channels in a channel bandwidth for transmission of the EDMG MU PPDU, the encoded codeword includes a concatenation of a plurality of encoded sequences, which are based on the LDPC codeword

306

Determine one or more scrambled data blocks by scrambling one or more respective repetitions of the data block, a count of the one or more repetitions of the data block is based on a count of one or more space-time streams for transmission of the EDMG MU PPDU

308

Modulate the one or more scrambled data blocks

310

Transmit the EDMG MU PPDU over the channel bandwidth

Fig. 3

402

Decode an EDMG Header B field corresponding to a wireless communication station (STA) in an EDMG Multi-User (MU) Physical Layer Protocol Data Unit (PPDU) received over a channel bandwidth including one or more 2.16 Gigahertz (GHz) channels, the EDMG-Header B field is encoded based on a count of space-time streams to the STA and a count of the one or more 2.16 GHz Channels

404

Process a data field of the EDMG MU PPDU based on the EDMG Header B field corresponding to the STA

Fig. 4

Fig. 5

EP 3 602 989 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62570356

- US 62476929

**Non-patent literature cited in the description**

- EDMG Header-B Encoding and Modulation Method for SC PHY in 11ay ; 11-16-0989-00-00ay-edmg-header-b-encoding-and-modulation-method-for-sc-phy-in-11ay. **ARTYOM LOMAYEV.** IEEE DRAFT; 11-16-0989-00-00AY-EDMG-HEADER-B-ENCODING-AND-MODULATION-METHOD-FOR-SC-PHY-IN-11AY. IEEE-SA MENTOR, 25 July 2016, vol. 802.11ay, 1-13